# FASCICULE DE BREVET EUROPEEN

(11) **EP 1 147 517 B1**
(45) Date de publication et mention de la délivrance du brevet: **09.04.2003**
(21) Numéro de dépôt: 00900646.1
(22) Date de dépôt: 21.01.2000
(51) Int. Cl.: G11B 7/00, G11B 7/135

(54) **PROCEDE DE PHOTOINSCRIPTION POUR MODIFIER L'ORIENTATION DES MOLECULES D'UN MATERIAU MOLECULAIRE PHOTOSENSIBLE**
VERFAHREN ZUM LICHTINDUZIERTEN SCHREIBEN ZUR MODIFIZIERUNG DER AUSRICHTUNG DER MOLEKÜLE EINES PHOTOEMPFINDLICHEN MOLEKULAREN MATERIALS
PROCESS OF PHOTOINSCRIPTION FOR MODFYING THE ORIENTATION OF MOLECULES OF A PHOTOSENSITIVE MOLECULAR MATERIAL

(30) Priorité: 21.01.1999 FR 9900627
(43) Date de publication de la demande: 24.10.2001
(73) Titulaire: FRANCE TELECOM, 75015 Paris (FR)
(72) Inventeur: ZYSS, Joseph, F-92330 Sceaux (FR); BRASSELET, Sophie, F-75014 Paris (FR); TOUSSAERE, Eric, F-92320 Chatillon (FR)
(74) Mandataire: Callon de Lamarck, Jean-Robert
(86) Numéro de dépôt international: FR0000145
(87) Numéro de publication internationale: WO00043995

(56) Documents cités:
- WO-A-92/02856
- US-A- 4 775 970
- US-A- 5 179 267
- US-A- 5 204 193
- PATENT ABSTRACTS OF JAPAN vol. 013, no. 492 (P-955), 8 novembre 1989 (1989-11-08) & JP 01 196744 A (VICTOR CO OF JAPAN LTD), 8 août 1989 (1989-08-08)

## Description

La présente invention est relative à un procédé pour la photoinscription d'une propriété optique non linéaire dans une structure comportant au moins un matériau moléculaire photosensible.

On sait qu'il est possible de contrôler localement, par photo-inscription au moyen de faisceaux cohérents polarisés, la distribution orientationelle de molécules, par exemple dans une matrice amorphe de type polymère ou sol-gel, et de modifier ainsi la distribution de certaines de leurs propriétés optiques linéaires ou non linéaires.

Ces propriétés peuvent être l'indice de réfraction, l'absorption, les susceptibilités non linéaires, en particulier quadratique et cubique, la luminescence électro ou photo-induite, la photochimie, le caractère photoréfractif, etc...

Classiquement, on utilise pour l'écriture et la lecture de propriétés linéaires et/ou non linéaires photoinscrites au moyen de faisceaux cohérents sur un matériau moléculaire une configuration co-propagative dans laquelle la direction de lecture (c'est à dire la direction des faisceaux en sortie du matériau, qui sont porteur de l'effet optique généré) est identique à la direction d'écriture (c'est à dire celle des faisceaux de photo-inscription).

Par écriture, on entend ici une structuration du matériau photosensible apte à lui conférer une propriété telle que ci-dessus.

Une difficulté majeure dans le processus de photoinscription est liée à l'absorption du faisceau d'écriture, résultant elle-même des contraintes qui imposent de procéder dans des conditions nécessairement spectralement résonnantes ou quasi résonnantes pour des raisons d'efficacité.

Une difficulté supplémentaire rencontrée dans le cas où l'on cherche à photoinscrire des propriétés exigeant une contrainte de quasi accord de phase avec la configuration usuelle copropagative tient en ce que la contrainte de quasi accord de phase impose en général de travailler avec des longueurs d'onde résonnantes en écriture et en lecture qui sont les mêmes (ou d'avoir recours à des processus non linéaires d'ordre élevé).

Il en résulte une forte absorption en lecture qui limite la longueur d'interaction à la profondeur de pénétration du ou des faisceaux absorbés par résonance spectrale, sur laquelle il est possible de travailler.

Un but de l'invention est de pallier ces problèmes.

On connaît déjà par le document :
- S. Brasselet et al. : « Control of the polarization dependence of optically poled nonlinear polymer films »- Optic Letters, Vol.22, n°19, p.1464-1466, octobre 1997,
des procédés de photoinscription et de lecture d'au moins une propriété optique non linéaire dans une structure comportant au moins un matériau moléculaire photosensible selon lequel on irradie ladite structure avec au moins deux faisceaux optiques d'écriture mutuellement cohérents qui modifie(nt) l'orientation des molécules dudit matériau moléculaire, l'un au moins de ces faisceaux étant susceptible d'induire une absorption à plusieurs photons dans le matériau.

Ces procédés sont limités par les contraintes évoquées ci-dessus.

On connaît déjà, par exemple par le document WO 92/02856, un procédé selon lequel on réalise une photoinscription sur une structure comportant au moins un matériau moléculaire photosensible, en irradiant ladite structure avec un faisceau afin d'induire une absorption à plusieurs photons dans le matériau,

Un tel procédé permet par exemple de photoinscrire un guide d'onde sur un matériau.

L'invention propose quant à elle un procédé selon la revendication 1.

On rappelle qu'un faisceau multi-photons combinent des émissions qui, pour un matériau excité, présentent une même longueur d'onde, mais correspondent à des transitions énergétiques différentes sur ledit matériau.

Bien entendu, un faisceau dit de pompe peut également être un faisceau en lecture.

Avec le procédé proposé par l'invention, il est possible d'écrire les propriétés optiques non linéaires, sans limitation dans la direction perpendiculaire à la direction de confinement selon laquelle on distribue lesdites propriétés.

Par ailleurs, on dissocie les directions des faisceaux d'écriture et des faisceaux en lecture, ce qui permet par exemple de respecter la contrainte de quasi accord de phase sans être limité par la dimension du matériau selon la direction de lecture.

On peut par exemple faire varier au cours d'un balayage les paramètres définissant les intensités et les états de polarisation et/ou déphasages des faisceaux d'écriture.

De cette façon, on peut découpler les contraintes de résonance spectrale associées à l'écriture - laquelle est effectuée pour des raisons d'efficacité dans des conditions résonantes ou quasi résonantes spectralement - des contraintes de résonance spatiale et spectrale susceptibles autrement de limiter l'efficacité du dispositif en lecture.

Ceci permet de façon générale de réaliser, sans limitation quant à la dimension dans la direction de lecture et sans destruction des molécules qui portent les propriétés optiques, une photo-inscription permanente d'une distribution continue ou pixel par pixel de propriétés optiques, par exemple d'une distribution spatio - tensorielle de susceptibilités d'ordre n (χⁿ(**r**), où n est un nombre entier donné et où **r** représente la ou les coordonnées vectorielles d'un point courant de la structure.

Par ailleurs, les procédés proposés par l'invention sont avantageusement complété par les différentes caractéristiques suivantes prises seules ou selon toutes leurs combinaisons possibles :
- on balaye la structure confinante avec au moins un faisceau optique d'écriture et en ce qu'un (ou plusieurs) paramètres d'au moins l'un des faisceaux d'écriture est (ou sont) contrôlé(s) en fonction du déplacement relatif du ou des faisceaux de balayage et de ladite structure ;
- on teste la photoinscription dans la zone irradiée par le ou les faisceaux de balayage et on commande le déplacement relatif du ou des faisceaux de balayage et de la structure confinante en fonction du résultat de ce test ;
- les faisceaux d'écriture sont irradiés à travers une lentille optique et en ce qu'on contrôle un (ou plusieurs) paramètres d'au moins l'un des faisceaux d'écriture ;
- les faisceaux d'écriture sont irradiés à travers un masque et en ce qu'on contrôle un (ou plusieurs) paramètres d'au moins l'un des faisceaux d'écriture ;
- les faisceaux d'écriture sont irradiés à travers une structure holographique et en ce qu'on contrôle un (ou plusieurs) paramètres d'au moins l'un des faisceaux d'écriture ;
- un paramètre que l'on contrôle sur un ou plusieurs faisceaux d'écriture est une intensité de faisceau et/ou un état de polarisation et/ou une direction de propagation et/ou un recouvrement spatial de plusieurs faisceaux d'écriture et/ou une longueur d'onde et/ou la phase relative entre des faisceaux ;
- on contrôle un paramètre en générant un bruit sur ce paramètre et en contrôlant les caractéristiques statistiques de ce bruit ;
- on contrôle une température du matériau moléculaire ;
- on contrôle ladite température au moyen d'une irradiation par un faisceau complémentaire permettant de réaliser un échauffement local en un point d'impact des faisceaux d'écriture ;
- les faisceaux d'écriture photo inscrivent un réseau au quasi accord de phase pour la propagation du ou des faisceaux de pompe et du ou des faisceaux en lecture ;
- le matériau moléculaire est préalablement orienté par application d'un champ électrique et/ou par chauffage ;
- la structure confinante est une portion de film et/ou un guide ruban qui s'étend selon la direction de propagation du ou des faisceaux de lecture et/ou une microcavité dans laquelle le ou les faisceaux de lecture se propagent en boucle et/ou une fibre optique et/ou une combinaison de tels éléments.

D'autres caractéristiques et avantages de l'invention ressortiront encore de la description qui suit. Cette description est purement illustrative et non limitative. Elle doit être lue en regard des figures annexées sur lesquelles:
- la figure 1 représente schématiquement un dispositif permettant de comprendre la mise en oeuvre d'un procédé conforme à l'invention ;
- les figures 2a et 2b représentent schématiquement deux modes de réalisation d'un guide optique indépendant de la polarisation, conformément à un mode de mise en oeuvre possible de l'invention.

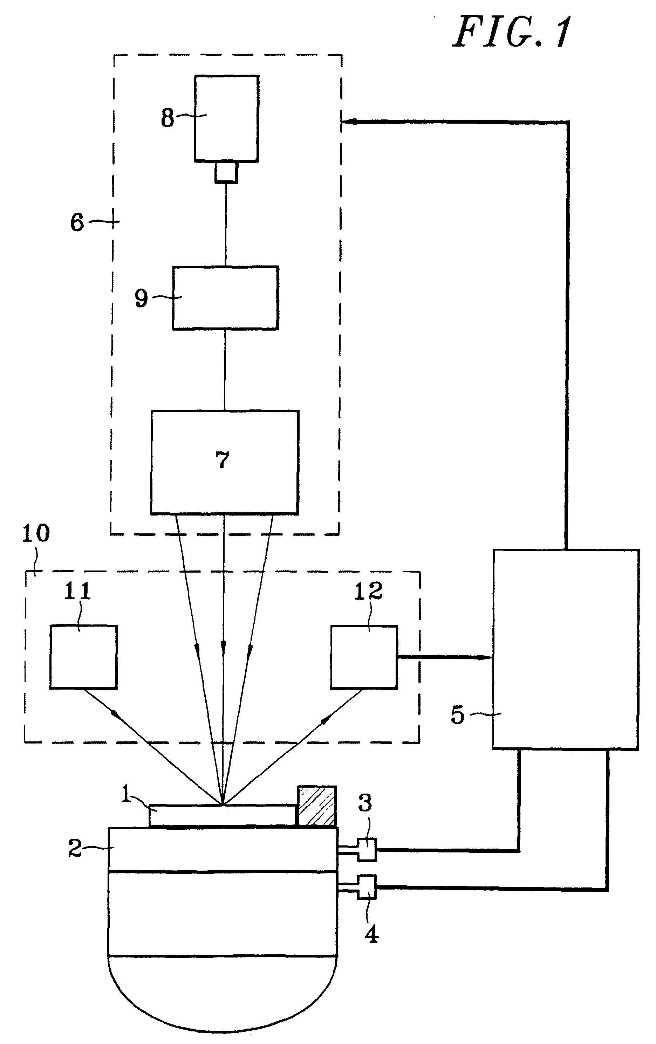

Le dispositif représenté sur la figure 1 permet de réaliser par illumination en géométrie transverse une photo-inscription sur un échantillon 1 (films, guides ou circuiterie plus complexe) qui est en un matériau dans lequel certaines molécules se réorientent et/ ou sont modifiées dans certaines conditions d'irradiation. Un tel matériau est par exemple un matériau amorphe ou sol-gel comportant des molécules non centro-symétriques conjuguées à transfert de charge, tel qu'un colorant diazoïque substitué à ses deux extrémités par des substituants respectivement électro-donneur et électro-accepteur.

Cet échantillon 1 est disposé sur un support 2 monté sur un berceau mobile à degrés de liberté en rotation et en translation. Les déplacements en rotation et en translation du support 2 sont ajustables pas à pas à l'échelle du µm par l'intermédiaire de moyens de motorisation 3, 4 qui sont commandés par un calculateur 5 qui gère l'écriture sur l'échantillon 1.

Le calculateur 5 détermine les différents paramètres de photo-inscription et commande un bloc optique 6 qui génère les faisceaux qui irradient l'échantillon 1.

Dans l'exemple illustré sur la figure, qui correspond au cas de la photo-inscription d'une distribution de χ², ces faisceaux sont au nombre de trois. Ce nombre est susceptible de descendre à 2 dans une configuration dite dégénérée dans laquelle la longueur d'onde du faisceau d'écriture le plus intense - par exemple dans l'infrarouge - dit faisceau fondamental, est double de celle du faisceau le moins intense - alors dans le visible - et dit harmonique.

Les faisceaux générés par le bloc 6 illuminent le substrat qui constitue l'échantillon 1 perpendiculairement ou obliquement par rapport au plan selon lequel ledit substrat s'étend.

Le calculateur 5 contrôle les différents paramètres d'écriture au déplacement dudit substrat 1 de façon à modifier continûment, ou en mode pixellisé les propriétés optiques (symétrie, amplitude, positionnement, facteurs géométriques divers) non linéaires que l'on cherche à photo-inscrire.

Les différents paramètres d'écriture qui sont contrôlés de façon à obtenir une distribution de χⁿ particulière sont :
- l'intensité des faisceaux
- leurs états de polarisation
- leurs phases relatives
- les directions de propagation des faisceaux
- le recouvrement spatial entre faisceaux
- les longueurs d'onde
- la température, le chauffage du substrat pouvant être réalisé par l'intermédiaire d'un faisceau laser secondaire réalisant un chauffage local
- un champ électrique ou magnétique appliqué au substrat, etc.

Ces différents paramètres peuvent être contrôlés de façon à correspondre à des valeurs déterministes définies par le calculateur 5.

En variante, ces paramètres peuvent être contrôlés de façon statistique.

Par exemple pour contrôler la phase, on peut utiliser une lame optique montée sur un berceau qui permet de modifier son orientation par rapport au faisceau d'écriture et par là le chemin optique du faisceau traversant la lame.

Dans le cas où l'on réalise un contrôle statistique, on génère un bruit donné au moyen d'un générateur de bruit et on commande les mouvements de la lame optique sur son berceau par le signal de bruit ainsi généré.

En contrôlant les caractéristiques statistiques de ce bruit et notamment sa variance, il est possible de générer successivement sur la structure que l'on irradie des portions où les molécules sont statistiquement fortement orientées selon une même direction (zone où le bruit utilisé pour la photoinscription correspond à une variance faible) et des zones où au contraire les molécules sont désordonnées et ont chacune une orientation aléatoire (zone où le bruit utilisé pour la photoinscription correspond à une forte variance).

Le bloc optique 6 comporte un oscillateur paramétrique 7 pompé optiquement par un laser 8 lui-même accordable (par exemple, un laser Ti : Sa). Entre ce laser 8 et l'oscillateur paramétrique 7 est interposé un doubleur ou tripleur de fréquence 9. Ainsi, on dispose en sortie du dispositif paramétrique de trois longueurs d'onde variables, dont les fréquences ωₚ, ωᵢ et ωₛ vérifient ωₚ = ωᵢ + ωₛ.

Plusieurs faisceaux d'écriture sont utilisés pour contrôler la photo-inscription.

A cet effet, le montage comporte également un bloc de contrôle 10, avec une source 11 et un détecteur 12, pour respectivement émettre et détecter un rayonnement sonde à une longueur d'onde ω_{c} de contrôle, afin de vérifier les propriétés photo-inscrites. On pourra utiliser à cette fin un des faisceaux d'écriture, par exemple ωᵢ.

Pour modifier l'intensité des faisceaux, le bloc optique 6 comporte pour chacun de ceux-ci un atténuateur variable commandé par le calculateur 5.

Le bloc optique 6 comporte également des moyens de défocalisation, de modification des conditions de génération paramétrique ou de doublement de fréquence à l'origine d'un ou plusieurs des faisceaux d'écriture.

Il comporte en outre des dispositifs classiques de polarisation permettant de générer des états de polarisation linéaires circulaires ou elliptiques.

Le bloc d'écriture permet en particulier de préparer une configuration multipolaire à n photons de géométrie arbitraire, par mise en oeuvre d'états de polarisation définis par les dispositifs de polarisation adéquats. Une telle configuration pourra être ajustée à la symétrie des molécules orientables constituant elles-mêmes des multipôles moléculaires matériels de façon à optimiser le rendement de photo-inscription et d'aboutir à des susceptibilités macroscopiques optimales.

Il comporte des moyens de déphasage tels que des lames d'indice d'épaisseur variable.

Comme on l'aura compris, le calculateur 5 gère la direction d'incidence des faisceaux par rapport à l'échantillon 1, leur point d'impact, ainsi que les différents paramètres du bloc optique 6 en fonction du profil χⁿ recherché.

Bien entendu, d'autres variantes de dispositifs pour la mise en oeuvre de l'invention sont envisageables.

Notamment un dispositif pour la mise en oeuvre de l'invention peut présenter un support échantillon fixe, n'autorisant par exemple que des réglages manuels pour un positionnement initial grossier, le bloc d'écriture étant alors mobile.

En variante encore, il peut être prévu que le bloc d'écriture et le support d'échantillon sont tous deux fixes, l'irradiation intervenant à travers un ou plusieurs masques ou à travers des moyens optiques tels qu'une structure holographique (structure transparente présentant un jeu de réseaux ou de fentes de diffraction, ou tout enregistrement holographique adéquat par exemple).

Dans tous les cas, le profil χⁿ obtenu confère à la structure photoinscrite une ou plusieurs propriété(s) d'optique non linéaire telle qu'un effet Pockels (effet électro-optique linéaire) pour n = 2 en distribution spatialement uniforme des propriétés sur la structure ou en distribution présentant une séquence d'orientations successivement parallèles ou perpendiculaires au substrat dans le cas d'un guide ruban, un effet de mélange à trois ondes optiques (génération de second harmonique, somme et différence de fréquences. oscillation, émission et amplification paramètrique par exemple).

Par exemple, en partant d'une structure avant photoinscription de type Fabry Perot à miroirs de Bragg et en réalisant sur cette structure une photoinscription d'une propriété non linéaire (quadratique par exemple) selon une périodicité spatiale dans la direction de propagation correspondant au quasi accord de phase, on obtient un oscillateur paramètrique. Une structure semblable sans miroir de Bragg constitue un émetteur ou un amplificateur paramétrique à fonctionnement à simple passage.

Dans le cas d'une structure oscillateur ou émetteur paramètrique, on utilise ladite structure de la façon suivante. Un premier faisceau intense, dit de pompe, est injecté dans la structure en mode guidé et donne naissance, de par la propriété non linéaire (quadratique par exemple) préalablement photoinscrite, à deux faisceaux de plus grandes longueurs d'onde, dits respectivement signal et complémentaire eux-mêmes guidés. Ces deux signaux constituent les deux signaux de lecture que l'on cherche à réaliser.

Dans le cas d'un amplificateur paramètrique, le signal et la pompe sont alors tous les deux présents à l'entrée de la structure. La structure permet alors d'amplifier le faisceau signal en générant de plus le faisceau complémentaire.

La structure photoinscrite obtenue s'utilise de la façon suivante. Un faisceau dit de pompe est injecté soit selon un mode guidé, soit encore à travers la structure selon une configuration dite en simple passage parallèle à ou oblique par rapport à une des directions de confinement de la structure. L'émission laser ainsi engendrée par le faisceau de pompe; à une longueur d'onde différente de celle du faisceau de pompe, se propage selon un mode guidé ou en boucle.

En outre, la structure peut combiner de façon séquentielle des propriétés non linéaires ou des propriétés luminescentes ou laser (laser auto-doublant ; interrupteur non linéaire par exemple).

On va maintenant décrire de façon détaillée un. exemple de réalisation d'un composant modulateur par irradiation d'un guide optique constitué par une couche polymère déposée sur un substrat, afin d'y créer une zone non centro-symmétrique électro-optiquement active.

Le guide optique peut être constitué par un copolymère de méthyle méthacrylate et de méthyle méthacrylate substitué par un colorant rouge dispersé (DR1) avec une concentration molaire de 30% de colorant (DR1-MMA) correspondant à un indice de réfraction de 1.6 à une longueur d'onde de 1.32µm. Ce copolymère est déposé sur un substrat en silicium recouvert d'une couche de 7µm de silice, sur une largeur de 3µm avec une épaisseur de 0.9µm. Le guide est ensuite revêtu d'une couche de PMMA de 0,3 micromètres d'épaisseur.

Le laser utilisé pour l'irradiation est une source Nd3 + Yag impulsionelle émettant des impulsions d'une durée de 30picosecondes à une fréquence de répétition de 30Hz et à la longueur d'onde de 1.064micromètre.

Le doubleur de fréquence 9 est un cristal de KDP dans une configuration de type II. Le faisceau émis à la longueur d'onde précitée (fréquence ωₚ) correspond à un flux lumineux de 5GW/cm2, tandis que le faisceau émis à la fréquence 2ωₚ présente un flux de 100MW/cm2.

La longueur de guide illuminé est de 0.6cm. La durée de l'illumination est d'une heure.

Un changement de nature des molécules peut intervenir au cours de la photoinscription (blanchiment par exemple).

C'est notamment le cas lors d'une irradiation avec une intensité au dessus d'une seuil de modification, auquel cas les molécules changent de structure en fonction d'une façon contrôlable selon leur orientation.

Ce peut être le cas également dans le cas où, à la place du DR1 on utilise un analogue stilbénique du DR1 (tel qu'une molécule DANS, c'est à dire 4-4' diméthylaminonitrostilbène) présentant des caractéristiques de photoisomérisation irréversible sous l'effet des faisceaux d'écriture, aboutissant à un changement contrôlé de façon orientationnelle.

Comme on l'aura compris, les techniques proposées par l'invention trouvent avantageusement application pour la photoinscription d'une distribution spatiale de susceptibilités non linéaires du second ordre (χ²).

A cet effet, on altère périodiquement un ou plusieurs paramètres du faisceau d'écriture au cours du déplacement selon une direction donnée parallèle à la surface de l'échantillon (par exemple la direction du guide), selon une période spatiale égale à 2π / Δβ, elle-même déterminée à partir de la dispersion de l'indice de réfraction à la pulsation de l'onde de lecture correspondant aux modes de propagation utilisés en lecture selon la relation Δβ = β_{ωp} - β_{ωc} - β_{ωs}, où β_{ω} est le vecteur d'onde effectif correspondant au mode de propagation utilisé en lecture à la pulsation ω par β_{ω} = n^{eff}_{ω} ω / c, n^{eff}_{ω} étant l'indice effectif du mode, et où ωₚ, ω_{c} et ωₛ sont les pulsations respectivement du faisceau de pompe et des deux faisceaux en lecture que constituent le faisceau complémentaire et le faisceau signal.

On aboutit ainsi à un guide dont les propriétés quadratiques sont modulées à une période spatiale accordée à la lecture, respectant ainsi la contrainte de quasi accord de phase pour les fréquences des faisceaux de pompe et en lecture.

La combinaison de différents modes d'écriture et de masquage permet d'envisager de nouveaux composants, difficiles à réaliser dans d'autres conditions, par exemple, un réseau de quasi accord de phase indépendant à la polarisation.

On peut également réaliser un réseau photo-inscrit en faisant tourner continûment, avec la période voulue, les polarisations maintenues parallèles aux champs optiques aux fréquences ω et 2ω.

En variante encore, si les trois faisceaux en sortie du bloc optique 6 sont colinéaires, polarisés linéairement en polarisations parallèles entre elles et se propagent perpendiculairement au substrat, le terme prépondérant du tenseur χ² se trouve parallèle à l'axe commun de polarisation des faisceaux d'écriture. Si l'on balaye une telle configuration dans la direction perpendiculaire à la polarisation commune ou le long d'un guide prédessiné, on obtient une configuration non-linéaire favorable aux modes TE.

En variante encore, en combinant avec un balayage donné une variation périodique d'un paramètre optique, par exemple de déphasage, ou la rotation - (atténuation) des polarisations d'écriture, on peut obtenir un guide qui correspond à un quasi accord de phase pour un mode TE.

Les techniques qui viennent d'être décrites peuvent être utilisées pour réaliser un modulateur - ou tout autre dispositif pour le traitement du signal - indépendant à la polarisation par mise en série ou en parallèle de tronçons de guides orientés parallèlement au substrat (mode TE) ou perpendiculairement au substrat (mode TM) ce dernier type d'orientation étant obtenu par orientation électrique.

Dans le cas d'une structure en guide d'onde à deux directions de confinement et à finalité électro-optique, si ces deux directions de confinement sont perpendiculaires, il est possible de réaliser une photoinscription selon une direction oblique par rapport à l'une et à l'autre des deux directions de confinement.

On obtient alors une orientation des molécules qui est également en oblique par rapport aux directions de confinement et qui permet à la fois un mode TE et un mode TM. La direction oblique de photoinscription est alors préférentiellement choisie de façon à ce que la photoinscription réalisée assure r₃₃ = r₁₃ où r₃₃ et r₁₃ désignent, selon la notation usuellement utilisée dans le domaine, les coefficients du tenseur électro-optique linéaire.

En variante, dans le cas où la structure confinante est celle d'un guide optique confiné à deux directions de confinement, on irradie une première portion selon une direction parallèle à une première direction de confinement, puis une deuxième portion selon une direction parallèle à la deuxième direction de confinement, puis à nouveau selon une direction parallèle à la première direction de confinement avec un déphasage de π, et ainsi de suite.

Il est ainsi possible d'inscrire sur la structure du guide optique polymère une succession de portions dans lesquelles les molécules ont successivement une orientation perpendiculaire à la première direction de confinement, puis une orientation perpendiculaire à la deuxième direction de confinement, puis, si on le souhaite, une orientation inverse de la première orientation perpendiculaire à la première direction de confinement et plus loin une orientation inverse de la deuxième orientation perpendiculaire à la deuxième direction de confinement.

On l'aura compris, un tel guide optique constitue un guide indépendant de la polarisation, qui présente l'avantage d'être d'une réalisation particulièrement facile.

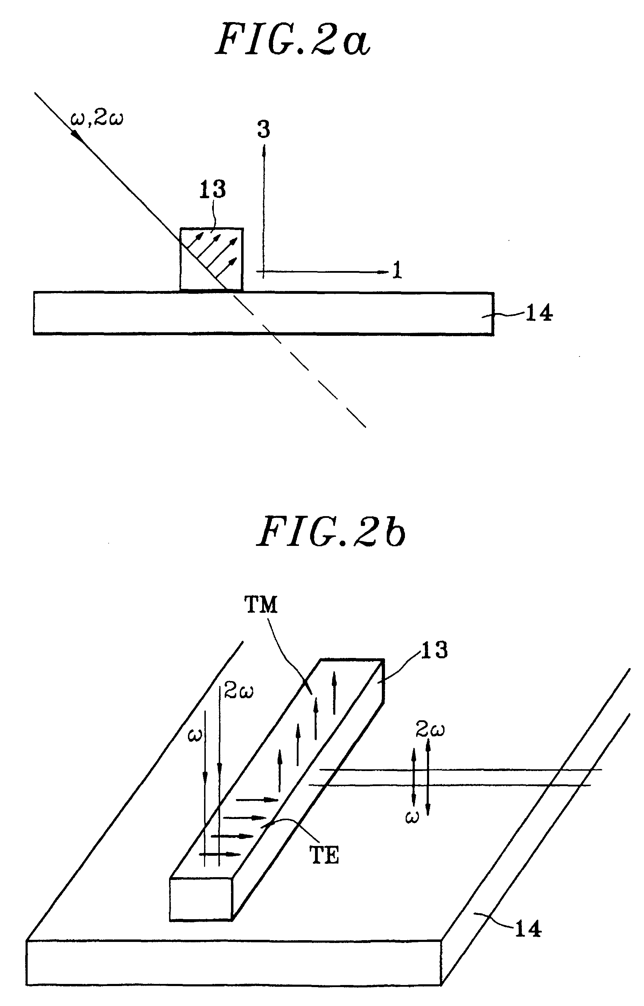

Des exemples en ce sens sont illustrés sur les figures 2a et 2b, le guide optique y ayant été référencé par 13, le substrat qui le porte par 14.

Le procédé proposé peut également être utilisé pour réaliser des microcavités laser ou paramétrique à orientation transverse.

A cet effet, l'échantillon est inséré entre des miroirs de Bragg de façon à conférer à l'ensemble un facteur de résonance élevé pour une propagation perpendiculaire au substrat. Par exemple, on dépose à la tournette un polymère sur un miroir de Bragg et on applique un deuxième miroir en regard du premier.

Par variation des paramètres optiques d'écriture, on module spatialement les propriétés optiques de la microcavité (laser, OPO ou mélangeur de fréquence à bas seuil, dispositif bistable de logique optique).

La bande des miroirs peut être centrée sur l'infrarouge autour de 1,3µm. L'écriture se fait dans la zone de transparence des miroirs à 0,532µm et 1,064µm par orientation tout optique.

On l'aura compris, l'invention qui vient d'être décrite peut présenter de nombreuses applications, notamment pour la réalisation de composants optiques de télécommunications ou d'instrumentation, tels que les composants suivants :
- modulateur insensible à la polarisation des ondes guidées, contrôleur de polarisation, convertisseur de polarisation TE/TM.
- doubleur ou mélangeur de fréquences
- amplificateur, émetteur et oscillateur paramétrique
- dispositif laser ou luminescent pompé optiquement ou électriquement à émission polarisée ;
- amplificateur pompé optiquement ou électriquement sensible à la polarisation ;
- mélangeur pour hétérodynage
- dispositif pour l'holographie non-linéaire à lecture infrarouge
- dispositif (par exemple « mire non-linéaire ») pour la cartographie spatio-tensorielle de champ par échantillonnage électro-optique.
- (micro)cavité laser à effets paramétriques présentant une matrice ou des molécules orientées
- dispositif de stockage de données : le couplage de faisceaux d'écriture par l'intermédiaire d'un dispositif de microscopie tel qu'un microscope confocal permet de réduire l'échelle du phénomène de photo-orientation à celle d'une molécule unique ou d'un agrégat moléculaire. Il en résulte la possibilité de manipuler par faisceaux lasers l'orientation d'objets moléculaires uniques et d'aboutir ainsi à des mémoires moléculaires réinscriptibles à plusieurs états, et à lecture linéaire ou non-linéaire.
- dispositif d'affichage de données : le dispositif d'orientation peut être utilisé notamment pour orienter des molécules luminescentes dans le cas d'écrans électroluminescents, ou d'orienter des matrices de cristaux liquides contenant des molécules sensibles au couplage avec le champ dans le cas d'écrans ou de dispositifs à cristaux liquides.
- utilisation de ce dispositif pour la désorientation (ou le blanchiment) pour l'effacement d'une information optique préalablement mémorisée, ou pour la photothérapie locale de circuiterie optique à base de polymères. L'utilisation de processus non linéaires ici (processus d'absorption à deux photons par exemple) permet d'obtenir une meilleure sélectivité en profondeur dans l'échantillon.

## Revendications

1. Procédé selon lequel on réalise une photoinscription sur une structure comportant au moins un matériau moléculaire photosensible, en irradiant ladite structure avec au moins deux faisceaux optiques afin d'induire une absorption à plusieurs photons dans le matériau,
et où la structure qui est irradiée est une structure optiquement confinante,
selon lequel on irradie ladite structure à travers un masque ou à travers une structure holographique avec au moins deux faisceaux optiques d'écriture mutuellement cohérents, ces faisceaux d'écriture étant parallèles à une direction de confinement de ladite structure ou obliques par rapport à celle-ci, et
selon lequel on contrôle un ou plusieurs paramètres d'au moins l'un de ces faisceaux d'écriture pour photoinscrire sur ladite structure confinante une distribution de susceptibilités non linéaires selon au moins une direction perpendiculaire à une direction selon laquelle la structure est confinée, le ou les paramètres étant déterminés en fonction du profil de susceptibilités que l'on souhaite conférer à la structure, et
selon lequel on propage dans ou à travers ladite structure photoinscrite un ou plusieurs faisceaux dits de pompe qui générèrent de par la distribution de susceptibilités non linéaires photoinscrite sur ladite structure un ou plusieurs faisceaux de lecture qui se propagent en configuration guidée dans la structure confinante sur laquelle la photoinscription a été réalisée.

2. Procédé selon la revendication 1, **caractérisé en ce qu'**on balaye la structure confinante avec au moins un faisceau optique d'écriture et **en ce qu'**on varie un ou plusieurs paramètres d'au moins l'un des faisceaux d'écriture en fonction du déplacement relatif du ou des faisceaux de balayage et de ladite structure.

3. Procédé selon la revendication 2, **caractérisé en ce qu'**on teste la photoinscription dans la zone irradiée par le ou les faisceaux de balayage et on commande le déplacement relatif du ou des faisceaux de balayage et de la structure confinante en fonction du résultat de ce test.

## Claims

1. A method in which photoinduction is performed on a structure including at least one photosensitive molecular material, by irradiating said structure with at least two light beams so as to induce plural-photon absorption in the material,
and in which the structure which is irradiated is an optically confining structure,
wherein said structure is irradiated through a mask or through a holographic structure with at least two mutually coherent write light beams, the write beams being parallel to a confinement direction of said structure or oblique relative thereto,
wherein one or more parameters of at least one of the write beams is controlled to photoinduce a distribution of non-linear susceptibilities on said confining structure in at least one direction perpendicular to a direction in which the structure is confined, the parameter(s) being determined as a function of the susceptibility profile that is to be imparted to the structure, and
wherein one or more "pump" beams is/are caused to propagate in or through said photoinduced structure cooperate with the distribution of non-linear susceptibilities photoinduced on said structure to generate one or more write beams propagating in guided configuration in the confining structure on which photoinduction has been performed.

2. A method according to claim 1, **characterized in that** the confining structure is scanned with at least one write light beam, and **in that** one or more parameters of at least one of the write beams is varies as a function of relative displacement between said structure and said scanning beam(s).

3. A method according to claim 2, **characterized in that** the writing performed in the irradiated zone by the scanning beam(s) is tested and relative displacement of the confining structure and of the scanning beam(s) is controlled as a function of the result of the test.

## Patentansprüche

1. Verfahren, bei dem eine Lichteinschreibung auf eine Struktur durchgeführt wird, die wenigstens ein lichtempfindliches molekulares Material umfaßt, indem die Struktur mit wenigstens zwei optischen Strahlen bestrahlt wird, um eine Absorption mehrerer Photonen im Material hervorzurufen,
wobei die Struktur, die bestrahlt wird, eine optisch begrenzte Struktur ist,
bei dem die Struktur durch eine Maske oder durch eine Hologrammstruktur mit wenigstens zwei gegenseitig kohärenten optischen Schreibstrahlen bestrahlt wird,
wobei diese Schreibstrahlen parallel zu einer Begrenzungsrichtung der Struktur oder geneigt bezüglich dieser sind, und
bei dem ein oder mehrere Parameter wenigstens eines dieser Schreibstrahlen gesteuert wird, um auf die begrenzte Struktur eine nicht-lineare Suszeptibilitätsverteilung gemäß wenigstens einer Richtung lichteinzubeschreiben, die senkrecht zu einer Richtung ist, in der die Struktur begrenzt ist, wobei der oder die Parameter abhängig vom Suszeptibilitätsprofil bestimmt werden, das man der Struktur verleihen möchte, und
bei dem ein oder mehrere sogenannte Pumpstrahlen in oder durch die lichteinbeschriebene Struktur hindurch verlaufen, die mittels der nicht-linearen, auf die Struktur lichteinbeschriebenen Suszeptibilitätsverteilung ein oder mehrere Lesestrahlen erzeugen, die in geführter Konfiguration in der begrenzten Struktur verlaufen, auf der die Lichteinbeschreibung durchgeführt worden ist.

2. Verfahren nach Anspruch 1, **dadurch gekennzeichnet, daß** die begrenzte Struktur mit wenigstens einem optischen Lesestrahl abgetastet wird, und daß ein oder mehrere Parameter wenigstens eines der Schreibstrahlen abhängig von der Relatiwerschiebung des oder der Abtaststrahlen und der Struktur variiert werden.

3. Verfahren nach Anspruch 2, **dadurch gekennzeichnet, daß** die Lichteinschreibung in die bestrahlte Zone mit dem oder den Abtaststrahlen geprüft wird, und die Relativverschiebung des oder der Abtaststrahlen und der begrenzten Struktur abhängig vom Ergebnis dieser Überprüfung gesteuert wird.
